# FASCICULE DE BREVET EUROPEEN

(11) **EP 0 588 396 B1**
(45) Date de publication et mention de la délivrance du brevet: **12.07.2000**
(21) Numéro de dépôt: 93202356.7
(22) Date de dépôt: 11.08.1993
(51) Int. Cl.: H04B 7/26

(54) **Système de communication radio mobile TDMA comportant un amplificateur d'émission nécessitant un temps de mise en condition**
TDMA Mobilfunkübertragungsanordnung mit Sendeverstärker mit verzögertem Sendezustand
TDMA mobile radio communication system with amplifier for emission having a time delay before transmission state

(30) Priorité: 14.08.1992 FR 9210037
(43) Date de publication de la demande: 23.03.1994
(73) Titulaire: Koninklijke Philips Electronics N.V., 5621 BA Eindhoven (NL)
(72) Inventeur: Makowski, Pierre, F-75008 Paris (FR)
(74) Mandataire: Chaffraix, Jean

(56) Documents cités:
- WO-A-90/06641

## Description

La présente invention concerne un système de transmission d'informations comportant au moins une station de base et une station satellite, système dans lequel l'échange d'informations entre la station de base et la station satellite s'effectue pour un sens au moins au moyen de tranches de temps, dans lequel une tranche de temps au moins est affectée à une première transmission et dans lequel chaque station satellite comporte un amplificateur d'émission nécessitant un temps de mise en condition.

De tels systèmes trouvent d'importantes applications dans le domaine des radiocommunications pour postes embarqués sur des mobiles. Ces systèmes peuvent être appelés à utiliser des tranches de temps organisées en un multiplex temporel du type TDMA (accès multiple par répartition temporelle).

Un problème se pose avec ce genre de système lorsqu'une station veut émettre dans une tranche de temps après une certaine durée d'inactivité. On se trouve alors confronté avec la mise en condition de l'amplificateur d'émission que comporte inévitablement la partie émission de la station émettrice et qui est le plus souvent un amplificateur linéaire de puissance. Cette mise en condition effectuée de préférence en porteuse pure ou avec une séquence de bits appropriée est nécessaire pour que l'on considère que l'amplificateur est bien linéaire et que les émissions futures occuperont le spectre qui leur est imparti. Ceci dure un laps de temps qui peut être important par rapport à la durée de la tranche de temps du multiplex et de ce fait le rendement global du multiplex s'en trouve affecté.

On notera que cette mise en condition des amplificateurs linéaires est décrite dans l'article : "Amplifier Linearization Using a Digital Predistorter with Fast Adaptation and Low Memory Requirements" de Dr. CAVERS IEEE VT, novembre 1990.

La présente invention propose un système du genre mentionné dans le préambule qui atténue dans une bonne mesure l'inconvénient précité et qui, donc, permet une meilleure exploitation de la trame temporelle utilisée.

Pour cela, un tel système est remarquable en ce que ladite tranche de temps de première transmission peut être affectée en tout ou en partie à une pluralité de stations satellites.

L'invention concerne aussi les stations faisant partie dudit système.

La description suivante accompagnée des dessins ci-annexés, le tout donné à titre d'exemple non limitatif, fera bien comprendre comment l'invention peut être réalisée.

La figure 1 montre un système conforme à l'invention.

La figure 2 montre l'organisation des trames TDMA utilisées.

La figure 3 montre différentes implantations du temps de mise en condition dans des tranches de temps antérieures et/ou de première transmission.

La figure 4 montre le schéma d'une station satellite.

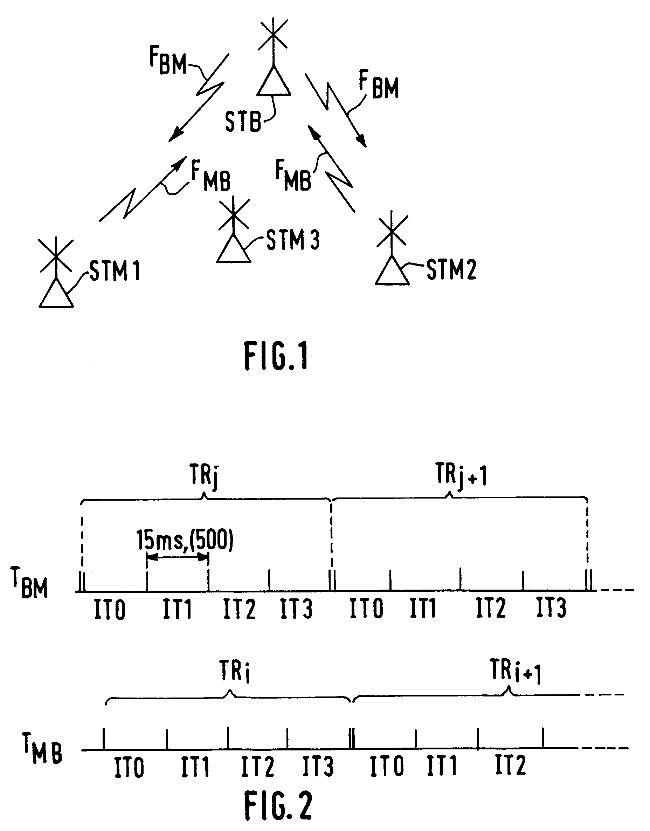

Le système, montré à la figure 1 est formé d'un ensemble de stations d'émission-réception STB, STM1, STM2 et STM3. Il va de soi que le nombre de stations peut être quelconque. STB est une station de base, STM1, STM2 et STM3 sont des stations satellites, c'est-à-dire gérées à partir de la station de base STB. Normalement, la station de base est un poste fixe tandis que les stations STM1, STM2 et STM3 sont des stations portables ou embarquées dans des véhicules. Les stations communiquent entre elles par des liaisons radioélectriques qui utilisent deux porteuses F_{BM} et F_{MB} (qui peuvent être identiques). En général, la porteuse F_{MB} sert pour les liaisons allant des stations satellites vers la station de base tandis que la fréquence porteuse F_{BM} sert pour les liaisons allant de la station de base vers les stations satellites. Ces différentes liaisons sont organisées en un multiplex temporel du type TDMA transmis par les porteuses précitées, mais la méthode décrite s'appliquerait tout aussi bien sur des liaisons FDMA utilisant des trames d'accès Aloha ou équivalent.

La figure 2 montre d'une manière schématique l'organisation de ce multiplex. Cette organisation dérive de celle qui a été décrite dans la demande de brevet français n°2 667 748. Les multiplex T_{BM} et T_{MB} utilisant respectivement les porteuses F_{BM} et F_{MB} ont la même structure mais il n'y a, a priori, aucune relation temporelle entre eux. Les multiplex T_{BM} et T_{MB} sont formés d'une suite de trames TRⱼ TRⱼ₊₁ pour l'un et TRᵢ et TRᵢ₊₁ pour l'autre. Chacune de ces trames est formée de tranches de temps portant les références IT0, IT1, IT2 et IT3. Ces tranches de temps ont en pratique une durée de l'ordre de 15 ms suffisante pour transmettre 450 éléments binaires. Souvent une tranche de temps est affectée à une première transmission.

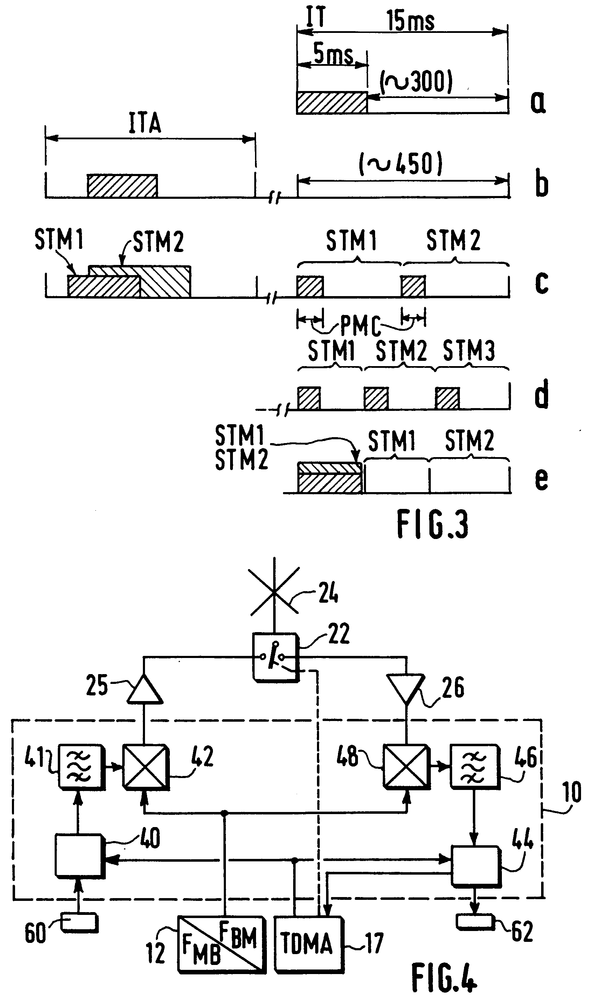

La figure 3, à la ligne a, montre une tranche de temps de première transmission IT où la zone hachurée montre le temps de mise en condition, ce temps dure, en pratique, 5 ms. Il reste alors un temps pour transmettre 300 éléments binaires.

Conformément à un premier aspect de l'invention, une tranche de temps antérieure ITA particulière peut être réservée (de façon fixe ou au coup par coup par la station de base) pour le temps de mise en condition de toutes les stations satellites ayant à utiliser un intervalle de temps de première transmission. Ainsi, le temps de mise en condition étant en dehors de ladite tranche, et en référence à la ligne b de la figure 3, la presque totalité de la tranche de temps IT peut être utilisée pour transmettre des éléments binaires : on peut ainsi transmettre 450 éléments au lieu des 300 dans l'exemple précédent, soit un gain dans ce cas de figure de 50 %. Il va de soi que les intervalles ITA et IT montrés en b à la figure 3 ne sont pas nécessairement contigus, et que le temps de mise en condition peut alors être plus long et atteindre la totalité d'un intervalle de temps. De même, le gain ainsi réalisé peut permettre de sous-diviser chaque tranche de temps en sous-multiples en fonction du nombre d'éléments binaires effectivement nécessaire à transmettre dans chaque intervalle.

Un deuxième aspect de l'invention est illustré en c sur la figure 3 où chaque tranche de temps peut être partagée par deux stations satellites ; les temps de mise en condition appartiennent au même intervalle de temps ITA qui n'est pas obligatoirement adjacent à la tranche de temps IT considérée. Il est à remarquer qu'une période PMC de remise en condition plus ou moins grande peut être réservée indépendamment pour chacune des stations satellites, leur permettant d'affiner cette mise en condition de leur émetteur si nécessaire (par exemple si l'intervalle de temps ITA utilisé pour effectuer cette mise en condition est trop éloigné de l'intervalle IT dans lequel sont transmises des informations utiles).

La ligne d de la figure 3 montre une découpe de la tranche IT utilisable par 3 stations satellites.

Selon un aspect préféré de l'invention illutré à la ligne e de la figure 3, une partie seulement de la tranche de temps de première transmission est affectée à la mise en condition des émetteurs des stations satellites ayant à utiliser une même tranche de temps de première transmission IT.

En référence à la ligne e de la figure 3, les deux stations satellites STM1 et STM2 utilisent la première partie (hachurée) de la tranche de temps de première transmission pour effectuer simultanément leur mise en condition, puis chacune utilise une des deux moitiés de la partie restante de ladite tranche pour transmettre leurs éléments binaires utiles.

Ainsi les mesures proposées par l'invention, par exemple sur des trames à accès aléatoire, peuvent permettre de doubler l'efficacité de la trame montante TMB. De même que précédemment, et en fonction des besoins d'éléments binaires à transférer par les stations satellites et du temps de mise en condition à réserver, chaque tranche de temps IT peut être allouée à un nombre plus important de stations satellites.

La figure 4 montre le schéma d'une station satellite. La sation est composée d'un ensemble d'émission-réception 10 piloté par un couple d'oscillateurs de référence 12 oscillant respectivement aux fréquences F_{MB} et F_{BM}. Cet ensemble s'adapte à une trame TDMA au moyen d'un gestionnaire de trames 17. Un commutateur de duplexage 22 commandé par le gestionnaire 17 permet, sur une même antenne 24, à la fois d'émettre sur la fréquence F_{MB} et de recevoir sur la fréquence F_{BM}. A ce commutateur 22, sont connectés un amplificateur d'émission 25 et un amplificateur de réception 26. C'est l'amplificateur 25 qui nécessite le temps de mise en condition afin que sa linéarité soit convenable. Ainsi, on évite que les non-linéarités ne polluent le spectre de fréquences.

L'ensemble 10 est formé d'une partie d'émission 40 coopérant avec un filtre 41, centré sur une fréquence intermédiaire FI, et d'un modulateur 42. Le modulateur 42 centre sur la fréquence porteuse F_{MB} les informations fournies par la partie 40. La partie 40 d'une part arrange les informations à transmettre selon les commandes établies par le gestionnaire 17, et d'autre part module les informations en phase, fréquence ou d'amplitude sur une fréquence intermédiaire FI. Ce gestionnaire 17 permet aussi de récupérer les différentes informations contenues dans la trame TDMA, reçues par un ensemble de réception 44. L'entrée de cet ensemble est relié à la sortie d'un filtre 46, centré sur la fréquence FI, connecté à la sortie d'un démodulateur 48. Ce démodulateur 48 reçoit les signaux de l'amplificateur 26 et ceux fournis par les oscillateurs 12 pour recevoir les signaux véhiculés à la fréquence F_{BM}. La référence 60 indique le dispositif d'émission de l'abonné qui est relié à la partie d'émission 40 et la référence 62, le dispositif de réception relié à l'ensemble de réception 44.

## Revendications

1. Système de transmission d'informations utilisant un multiplex temporel du type TDMA comportant au moins une station de base et une station satellite, système dans lequel l'échange d'informations entre la station de base et la station satellite s'effectue pour un sens au moins au moyen de tranches de temps, dans lequel une tranche de temps au moins est affectée à une première transmission et dans lequel chaque station satellite comporte un amplificateur d'émission nécessitant un temps de mise en condition caractérisé en ce que ladite tranche de temps de première transmission peut être affectée à une pluralité de stations satellites.

2. Système de transmission d'informations selon la revendication 1, caractérisé en ce que la tranche de temps de première transmission comporte les temps de mise en condition des amplificateurs d'émission des stations satellites.

3. Système de transmission d'informations selon la revendication 1, caractérisé en ce que les temps de mise en condition se déroulent dans au moins une tranche de temps antérieure à la tranche de temps de première transmission.

4. Système de transmission d'informations selon l'une des revendications 1 à 3, caractérisé en ce qu'une partie de la tranche de temps de première transmission est affectée au temps de mise en condition de l'émetteur d'au moins deux stations satellites.

5. Station satellite convenant à un système de transmission d'informations selon l'une des revendictions 1 à 3.

## Claims

1. An information transmission system including a time multiplex of the TDMA type, comprising at least a base station and a satellite station, in which system the exchange of information between the base station and the satellite station is effected for one direction at least by means of time slots, in which a time slot is at least assigned to a first transmission and in which each satellite station comprises a transmitter amplifier requiring a period of time to prepare it for operation, characterized in that said first transmission time slot may be assigned to a plurality of satellite stations.

2. An information transmission system as claimed in claim 1, characterized in that the first transmission time slot comprises the periods of time to prepare the transmitter amplifiers of the satellite stations for operation.

3. An information transmission system as claimed in claim 1, characterized in that the periods of time to prepare the transmitter amplifiers for operation occur in at least one time slot prior to the first transmission time slot.

4. An information transmission system as claimed in any one of claims 1 to 3, characterized in that a part of the first transmission time slot is assigned to the period of time to prepare the transmitter of at least two satellite stations for operation.

5. A satellite station suitable for an information transmission system as claimed in any one of claims 1 to 3.

## Patentansprüche

1. Informationsübertragungsanordnung unter Verwendung eines Zeitmultiplex vom Typ TDMA mit mindestens einer Basisstation und einer sekundären Station, wobei in der Anordnung der Informationsaustausch zwischen der Basisstation und der sekundären Station mindestens in einer Richtung in Zeitabschnitten vorgenommen wird, in der mindestens ein Zeitabschnitt einer ersten Übertragung zugeteilt wird, und in der jede sekundäre Station einen Sendeverstärker enthält, die einen verzögerten Sendezustand benötigt, dadurch gekennzeichnet, daß der besagte Zeitabschnitt der ersten Übertragung einer Vielzahl von sekundären Stationen zugeteilt werden kann.

2. Informationsübertragungsanordnung nach Anspruch 1, dadurch gekennzeichnet, daß der Zeitabschnitt der ersten Übertragung die verzögerten Sendezustände der Sendeverstärker der sekundären Stationen enthält.

3. Informationsübertragungsanordnung nach Anspruch 1, dadurch gekennzeichnet, daß die verzögerten Sendezustände mindestens in einem dem Zeitabschnitt der ersten Übertragung vorhergehenden Zeitabschnitt stattfinden.

4. Informationsübertragungsanordnung nach einem der Ansprüche 1 bis 3, dadurch gekennzeichnet, daß ein Teil des Zeitabschnitts der ersten Übertragung dem verzögerten Sendezustand des Senders mindestens zweier sekundärer Stationen zugeteilt ist.

5. Sekundäre Station, die sich für eine Übertragungsanordnung nach einem der Ansprüche 1 bis 3 eignet.
